(19) Europäisches Patentamt
European Patent Office
Office européen des brevets

(11) Veröffentlichungsnummer : **0 503 361 A1**

# (12) EUROPÄISCHE PATENTANMELDUNG

(21) Anmeldenummer : **92103214.0**

(22) Anmeldetag : **26.02.92**

(51) Int. Cl.[5] : **C08F 255/02,** // (C08F255/02, 230:08)

(30) Priorität : **09.03.91 DE 4107635**

(43) Veröffentlichungstag der Anmeldung : **16.09.92 Patentblatt 92/38**

(84) Benannte Vertragsstaaten : **BE DE FR GB NL**

(71) Anmelder : **BASF Aktiengesellschaft**
**Carl-Bosch-Strasse 38**
**W-6700 Ludwigshafen (DE)**

(72) Erfinder : **Brosius, Sibylle, Dr.**
**Cordovastrasse 29**
**W-6700 Ludwigshafen (DE)**
Erfinder : **Ruempler, Klaus-Dieter, Dr.**
**Erlenweg 4**
**W-6706 Wachenheim (DE)**
Erfinder : **Seiler, Erhard, Dr.**
**Erpolzheimer Strasse 1**
**W-6700 Ludwigshafen (DE)**
Erfinder : **Hahn, Susanne, Dr.**
**Friedrich-Karl-Strasse 1**
**W-6800 Mannheim 1 (DE)**
Erfinder : **Huber, Karl**
**Bensheimer Ring 6 a**
**W-6710 Frankenthal (DE)**
Erfinder : **Werner, Rainer Alexander, Dr.**
**Salinenstrasse 143**
**W-6702 Bad Duerkheim (DE)**

## (54) Teilvernetzte Kunststoffmasse.

(57) Teilvernetzte Kunststoffmasse mit einem Schmelzflußindex von 0,1 bis 50 g/10 min., bei 230°C und unter einem Gewicht von 2,16 kg, aus

a) einem Polymerisat aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat, beträgt

b) einer Organosilanverbindung der folgenden Formel (I)

$$A_{4-n}SiR_n, \quad (I)$$

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht,

erhältlich durch Umsetzung des Polymerisats a) mit der Organosilanverbindung b) in Anwesenheit eines radikalischen Initiators und eines Kondensationskatalysators, bei Temperaturen von 180 bis 280°C, Drücken von 1 bis 100 bar und mittleren Verweilzeiten des Reaktionsgemisches von 0,2 bis 10 Minuten.

Die erfindungsgemäßen Kunststoffmassen zeichnen sich insbesondere durch eine hohe Kerbschlagzähigkeit, eine gesteigerte Durchstoßfestigkeit und eine verbesserte Bindenahtfestigkeit aus.

EP 0 503 361 A1

Die vorliegende Erfindung betrifft eine teilvernetzte Kunststoffmasse mit einem Schmelzflußindex von 0,1 bis 50 g/10 min., bei 230°C und unter einem Gewicht von 2,16 kg, aus

a) einem Polymerisat aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat, beträgt

b) einer Organosilanverbindung der folgenden Formel (I)

$$A_{4-n}SiR_n, \qquad (I)$$

wobei A gleich oder verschieden ist und für einen Acry-, oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht,

erhältlich durch Umsetzung des Polymerisats a) mit der Organosilanverbindung b) in Anwesenheit eines radikalischen Initiators und eines Kondensationskatalysators bei Temperaturen von 180 bis 280°C, Drükken von 1 bis 100 bar und mittleren Verweilzeiten des Reaktionsgemisches von 0,2 bis 10 Minuten.

Außerdem betrifft die vorliegende Erfindung ein Verfahren zur Herstellung der erfindungsgemäßen teilvernetzten Kunststoffmassen sowie deren Verwendung zur Herstellung von Folien und Formkörpern.

Es ist bekannt, Polyethylene und Copolymerisate des Ethylens mit Vinylsilanen zunächst zu pfropfen und anschließend mit Hilfe eines Silanolkondensationskatalysators zu vernetzen (DE-A 2 611 491, US-A 3 646 155, GB-A 1 406 680, GB-A 1 408 154). Auf diese Weise erhält man Polymerisate mit verbesserten mechanischen Eigenschaften, insbesondere einer höheren Festigkeit.

Die Vernetzung von Polypropylen oder Copolymerisaten des Propylens mit ungesättigten Silanen in Gegenwart eines Silanolkondensationskatalysators und eines Peroxids wird ferner in den Offenlegungsschriften DE-A 33 27 149 und DE-A 35 20 106 beschrieben. Die dabei erhaltenen Polymerisate zeichnen sich durch eine hohe Kälteschlagzähigkeit und Formbeständigkeit aus.

Vernetzte Polymerisate weisen gegenüber nicht vernetzten Polymerisaten den Vorteil einer höheren mechanischen Stabilität auf. Vernetzte Materialien lassen sich aber aufgrund ihres geringen Schmelzflusses thermisch nicht mehr mit den in der Kunststofftechnik üblichen Methoden verformen (H. G. Elias "Makromoleküle", Verlag Hüthig & Wepf, 4. Auflage, seite 1000-1003).

Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Der Erfindung lag daher die Aufgabe zugrunde, eine Kunststoffmasse zu entwickeln, die die Vorteile von vernetzten Polymerisaten bezüglich ihrer mechanischen Festigkeit mit denen von unvernetzten Polymerisaten bezüglich ihrer leichten Verarbeitbarkeit miteinander vereinigt und darüber hinaus auf einfache Art hergestellt werden kann.

Demgemäß wurden die eingangs definierten, teilvernetzten Kunststoffmassen gefunden.

Die erfindungsgemäßen teilvernetzten Kunststoffmassen weisen einen Schmelzflußindex von 0,1 bis 50 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,1 bis 40 g/10 min, bei 230°C und unter einem Gewicht von 2,16 kg, beträgt.

Die erfindungsgemäßen Kunststoffmassen enthalten ein Polymerisat a) aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat, beträgt. Bevorzugt sind dabei Kunststoffmassen, deren Polymerisat a) aus 35 bis 90 Gew.-% Polypropylen und 10 bis 65 Gew.-% eines Propylencopolymerisats besteht, wobei deren Gehalt an einpolymerisierten $C_2$-$C_{10}$-Alk-1-enen bei 1 bis 40 Gew.-%, bezogen auf das Gesamtpolymerisat, liegt. Unter einpolymerisierten $C_2$-$C_{10}$-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 μm, insbesondere von 10 bis 300 μm, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel II

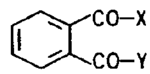

II

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder $SiO_2 \cdot aAl_2O_3$ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vier-, wertigen Titans, insbesondere Titantetrachlorid, sowie eine Elektronendonorverbindung, insbesondere ein Phthalsäurederivat der allgemeinen Formel II hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel III

$$R^1_nSi(OR^2)_{4-n} \qquad III$$

wobei $R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bezeichnet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, $R^2$ eine $C_1$- bis $C_4$-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutyisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die erfindungsgemäß einzusetzenden Polymerisate a) hergestellt werden. In einem bevorzugten Herstellungsverfahren wird dabei in einer ersten Polymerisationsstufe Propylen polymerisiert und dem daraus erhältlichen Propylenhomopolymerisat in einer zweiten Polymerisationsstufe ein Gemisch aus Propylen und einem oder mehreren $C_2$-$C_{10}$-Alk-1-enen hinzupolymerisiert.

Die Polymerisation des Propylens wird in der ersten Polymerisationsstufe bei einem Druck von 20 bis 40 bar einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen vorzugsweise so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren $C_2$-$C_{10}$-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten $C_2$-$C_{10}$-Alk-1-enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Weiterhin enthalten die erfindungsgemäßen, teilvernetzten Kunststoffmassen eine Organosilanverbindung b) der folgenden Formel (I) als Vernetzer,

$$A_{4-n}SiRn, \qquad (I)$$

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die

Zahlen 1, 2 oder 3 steht. Bevorzugt werden dabei solche Organosilanverbindungen b) eingesetzt, bei denen R für eine $C_1$-$C_8$-Alkoxygruppe und n für die Zahl 3 steht. Unter diesen Verbindungen sind insbesondere 3-Methacryloxypropyl-trimethoxysilan, Vinyltrimethoxysilan und Vinyltriethoxysilan hervorzuheben. In geringem Umfang können neben der Organosilanverbindung b) noch Ester der Acryl- bzw. Methacrylsäure als weitere Vernetzer verwendet werden.

Die erfindungsgemäßen, teilvernetzten Kunststoffmassen sind erhältlich durch Umsetzung des Polymerisats a) mit der Organosilanverbindung b) in Anwesenheit eines radikalischen Initiators und eines Kondensationskatalysators bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drükke von 1 bis 50 bar und mittlere Verweilzeiten von 0,2 bis 5 Minuten. Die Umsetzung der einzelnen Komponenten erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.butyl)peroxid, Di(tert.butyl)peroxid, 2,5-Dimethyl-2,5-di(tert.butylperoxy)hexan und 2,5-Dimethyl-2,5-di(tert.butylperoxy)hexin(3) hervorzuheben.

Als Kondensationskatalysatoren eignen sich insbesondere Carbonsäuresalze des Zinns, Eisens, Bleis, Zinks oder des Titans, wobei die Carbonsäuresalze des Zinns bevorzugt sind. Besonders geeignet sind dabei Verbindungen wie Dibutylzinndilaurat, Dibutylzinndiacetat oder Dibutylzinnoctoat. Daneben können auch Chelate der Titansäure oder Alkylamine eingesetzt werden. Zur Beschleunigung der Umsetzung des Polymerisats a) mit der Organosilanverbindung b) können dem Reaktionsgemisch ferner noch Wasser oder wasserabspaltende Mittel, beispielsweise Hydrate, hinzugefügt werden.

Zur Herstellung der erfindungsgemäßen, teilvernetzten Kunststoffmasse werden pro 100 Gew.-Teile des Polymerisats a, vorzugsweise 0,1 bis 5 Gew.-Teile der Organosilanverbindung b), 0,001 bis 2 Gew.-Teile des radikalischen Initiators und 0,001 bis 0,1 Gew.-Teile des Kondensationskatalysators verwendet. Dabei findet eine teilweise Vernetzung des Polymerisats a) statt.

In einem besonders bevorzugten Herstellungsverfahren werden dem Polymerisat a) unmittelbar nach dessen Herstellung entsprechende Mengen der Organosilanverbindung b), des radikalischen Initiators und des Kondensationskatalysators in einer, an den Herstellungsreaktor angeschlossenen Mischapparatur hinzugefügt. Vorzugsweise wird dabei als Mischapparatur ein Extruder verwendet. Nach Beendigung der Umsetzung wird die teilweise vernetzte Kunststoffmasse aus der Mischapparatur ausgetragen und in einem daran angeschlossenen Schachttrockner von flüchtigen Ausgangsprodukten getrennt. Die auf diese Weise erhaltene Kunststoffmasse ist direkt weiterverarbeitbar.

Durch die Wahl der speziellen Polymerisate a) und Organosilanverbindungen b) erhält man teilvernetzte Kunststoffmassen, die eine hohe mechanische Festigkeit, insbesondere eine hohe Kerbschlagzähigkeit, eine gesteigerte Durchstoßfestigkeit und eine verbesserte Bindenahtfestigkeit aufweisen und im Gegensatz zu vollständig vernetzten Kunststoffen noch gut verarbeitet werden können. Die erfindungsgemäßen teilvernetzten Kunststoffmassen sind auf sehr einfache Weise erhältlich, da sowohl die Pfropfung als auch die sich daran anschließende teilweise Vernetzung in einem Herstellungsschritt durchgeführt werden können.

Die erfindungsgemäßen teilweise vernetzten Kunststoffmassen eignen sich aufgrund ihrer relativ guten Verarbeitbarkeit insbesondere als Materialien für den Spritzguß, das Blasformen, die Extrusion und die Herstellung von Schäumen. Sie können dabei zur Herstellung von Formkörpern, Folien und Überzugsmaterialien verwendet werden.

Beispiele

Die Beispiele 1 - 7, sowie die Vergleichsbeispiele A-C wurden in einem Zweischneckenextruder der Firma Berstorff mit einem Länge/Durchmesser-Verhältnis von 33 durchgeführt. Die dabei verwendeten Polymerisate a) wurden als Grieß oder Granulat dem Zweischneckenextruder zugeführt und dort mit der jeweils eingesetzten Organosilanverbindung b), dem radikalischen-Initiator und dem Kondensationskatalysator aufgeschmolzen.

Beispiel 1

100 Gew.-Teile eines Propylenpolymerisats mit 55 Gew.-% Propylenhomopolymerisat, 45 Gew.-% Propylen-Ethylencopolymerisat [bestimmt durch Extraktionsfraktionierung nach W. Holtrup, Makromol. Chem. 178, 2335 (1977)], einem Ethylengehalt von 23 Gew.-%, bezogen auf das Gesamtpolymerisat [bestimmt durch Infrarotspektroskopie] und einem Schmelzflußindex von 2,1 g/10 min. [bei 230°C und 2,16 kg, nach DIN 53 735] wurden im Zweischneckenextruder mit 0,875 Gew.-Teilen Vinyltrimethoxysilan, 0,075 Gew.-Teilen Dicumylperoxid und 0,05 Gew.-Teilen Dibutylzinndilaurat vermischt und granuliert. Die Temperatur betrug dabei 220°C, der Druck 20 bar und die mittlere Verweilzeit 30 Sekunden. Danach wurde das Gemisch aus dem Zweischneckenextruder ausgetragen und anschließend wurde es in einem Wasserbad bei 95°C 8 Stunden lang einer Wärmebehandlung unterzogen.

Der Schmelzflußindex und die Izod-Kerbschlagzähigkeit der dabei erhaltenen teilvernetzten Kunststoffmasse können der nachfolgenden Tabelle 1 entnommen werden.

Beispiel 2

100 Gew.-Teile des im Beispiel 1 verwendeten Propylenpolymerisats wurden unter den gleichen Bedingungen wie im Beispiel 1 mit 0,80 Gew.-Teilen Vinyltrimethoxysilan, 0,15 Gew.-Teilen 2,5-Dimethyl-2,5-di(tert.butylperoxy)hexan und 0,05 Gew.-Teilen Dibutylzinndilaurat vermischt und entsprechend aufgearbeitet.

Der Schmelzflußindex und die Izod-Kerbschlagzähigkeit der dabei erhaltenen teilvernetzten Kunststoffmasse können der nachfolgenden Tabelle 1 entnommen werden.

Beispiel 3

100 Gew.-Teile des im Beispiel 1 verwendeten Propylenpolymerisats wurden unter den gleichen Bedingungen wie im Beispiel 1 mit 0,45 Gew.-Teilen Vinyltrimethoxysilan, 0,04 Gew.-Teilen 2,5-Dimethyl-2,5-di(tert.butylperoxy)hexan und 0,025 Gew.-Teilen Dibutylzinndilaurat vermischt und entsprechend aufgearbeitet.

Der Schmelzflußindex und die Izod-Kerbschlagzähigkeit der dabei erhaltenen teilvernetzten Kunststoffmasse können der nachfolgenden Tabelle 1 entnommen werden.

Vergleichsbeispiel A

Analog dem Beispiel 1 wurde die gleiche Menge des im Beispiel 1 verwendeten Propylenpolymerisats unter den gleichen Bedingungen, aber ohne Zugabe eines Vernetzungssystems aus einem ungesättigten Organosilan, einem radikalischen Initiator und einem Kondensationskatalysator, aufgearbeitet.

Der Schmelzflußindex und die Izod-Kerbschlagzähigkeit der dabei erhaltenen Kunststoffmasse können der nachfolgenden Tabelle 1 entnommen werden.

Tabelle 1

| | Beispiele | | | |
|---|---|---|---|---|
| | 1 | 2 | 3 | A |
| Schmelzflußindex [a)] [g/10 min.] | 0,2 | 0,6 | 0,4 | 2,1 |
| Izod-Kerbschlagzähigkeit [b)] [kJ/m²] | 69 | 72 | 75 | 22 |

a) analog DIN 53 735, bei 230°C und unter einem Gewicht von 2,16 kg

b) analog ISO 180 Verfahren 1A, bei -30°C

Dabei wurden spritzgegossene Probekörper des Typs 1A verwendet. Die Temperatur betrug bei diesen Messungen 250°C, die Fließfrontgeschwindigkeit 200 mm/sec.. Vor der Bestimmung der Izod-Kerbschlagzähigkeit wurden die Probekörper mindestens 1 Woche lang bei Raumtemperatur gelagert.

Beispiel 4

100 Gew.-Teile des im Beispiel 1 verwendeten Propylenpolymerisats wurden mit 0,80 Gew.-Teilen Ucarsil® PC2A und 0,20 Gew.-Teilen Ucarsil® PC1B (Vernetzungsmittel der Union Carbide Corporation) versetzt und analog dem Beispiel 1 aufgearbeitet.

Der Schmelzflußindex und die Ergebnisse von Durchstoßversuchen (Schädigungsarbeit und Durchstoßarbeit) der dabei erhaltenen, teilvernetzten Kunststoffmasse sind in der Tabelle 2 angegeben und werden mit den entsprechenden Werten für die aus dem Vergleichsversuch A erhaltenen Kunststoffmassen verglichen.

Tabelle 2

| | Beispiel 4 | Vergleichsbeispiel A |
|---|---|---|
| Schmelzflußindex a) [g/10 min] | 0,6 | 2,1 |
| Schädigungsarbeit b) [J] | | |
| bei 23°C | 24,8 | 18,6 |
| 0°C | 26,3 | 20,6 |
| -20°C | 34,2 | 29,2 |
| -40°C | 32,4 | 26,4 |
| Durchstoßarbeit b) [J] | | |
| bei 23°C | 26,7 | 20,1 |
| 0°C | 27,8 | 22,5 |
| -20°C | 35,1 | 30,3 |
| -40°C | 33,6 | 27,6 |

a) analog DIN 53 735, bei 230°C und unter einem Gewicht von 2,16 kg

b) Die Ergebnisse der Durchstoßversuche (Schädigungsarbeit und Durchstoßarbeit) wurden nach DIN 53 443, Teil 2 durchgeführt. Dabei wurden von den entsprechenden Kunststoffmassen spritzgegossene Rundscheiben mit einem Durchmesser von 60 mm und einer Dicke von 2 mm verwendet, die bei einer Temperatur von 250°C und einer Fließfrontgeschwindigkeit von 200 mm/sec hergestellt wurden. Vor der Messung wurden die Probekörper 500 Stunden bei 130°C gelagert.

Beispiel 5

100 Gew.-Teile eines Propylenpolymerisats mit 55 Gew.-% Propylenhomopolymerisat, 45 Gew.-% Propylen-Ethylencopolymerisat [bestimmt durch Extraktionsfraktionierung nach W. Holtrup, Makromol. Chem. 178, 2335 (1977)], einem Ethylengehalt von 23 Gew.-%, bezogen auf das Gesamtpolymerisat [bestimmt durch Infrarotspektroskopie] und einem Schmelzflußindex von 10,4 g/10 min. [bei 230°C und 2,16 kg, nach DIN 53 735] wurden im Zweischneckenextruder mit 0,40 Gew.-Teilen Ucarsil® PC2A und 0,20 Gew.-Teilen Ucarsil® PC1B (Vernetzungsmittel der Union Carbide Corporation), sowie 0,1 Gew.-Teilen 2,5-Dimethyl-2,5-di(tert.butylperoxy)-hexan und 0,05 Gew.-Teilen Dibutylzinndilaurat vermischt. Die Umsetzung und Aufarbeitung erfolgte dabei analog dem Beispiel 1.

Der Schmelzflußindex und die Ergebnisse von Dehnungsversuchen (Dehnung bei Streckspannung und Reißdehnung) der dabei erhaltenen, teilvernetzten Kunststoffmassen sind in der nachfolgenden Tabelle 3 aufgeführt.

Vergleichsbeispiel B

Analog dem Beispiel 5 wurde die gleiche Menge des im Beispiel 5 verwendeten Propylenpolymerisats unter den gleichen Bedingungen, aber ohne Zugabe eines Vernetzungssystems aus einem ungesättigten Organosilan, einem radikalischen Initiator und einem Kondensationskatalysator, aufgearbeitet.

Der Schmelzflußindex und die Ergebnisse von Dehnungsversuchen (Dehnung bei Streckspannung und Reißdehnung) der dabei erhaltenen Kunststoffmasse können der nachfolgenden Tabelle 3 entnommen werden.

Beispiel 6

100 Gew.-Teile des im Beispiel 1 verwendeten Propylenpolymerisats wurden unter den gleichen Bedingungen wie im Beispiel 1 mit 0,8 Gew.-Teilen Vinyltriethoxysilan, 0,375 Gew.-Teilen 2,5-Dimethyl-2,5-di(tert.butylperoxy)hexan und 0,1 Gew.-Teilen Dibutylzinndilaurat vermischt und entsprechend aufgearbeitet.

Der Schmelzflußindex und die Ergebnisse von Dehnungsversuchen (Dehnung bei Streckspannung und Reißdehnung) der dabei erhaltenen, teilvernetzten Kunststoffmasse sind in der nachfolgenden Tabelle 3 aufgeführt.

Beispiel 7

100 Gew.-Teile eines Propylenpolymerisats mit 82 Gew.-% Propylenhomopolymerisat, 18 Gew.-% Propylen-Ethylencopolymerisat, einem Ethylengehalt von 10 Gew.-%, bezogen auf das Gesamtpolymerisat und einem Schmelzflußindex von 2,0 g/10 min. [bei 230°C und 2,16 kg, nach DIN 53 735] wurden im Zweischneckenextruder mit 0,91 Gew.-Teilen Vinyltrimethoxysilan, 0,04 Gew.-Teilen 2,5-Dimethyl-2,5-di(tert.butylperoxy)hexan und 0,05 Gew.-Teilen Dibutylzinndilaurat vermischt und analog dem Beispiel 1 aufgearbeitet.

Der Schmelzflußindex und die Ergebnisse von Dehnungsversuchen (Dehnung bei Streckspannung und Reißdehnung) der dabei erhaltenen, teilvernetzten Kunststoffmasse sind in der nachfolgenden Tabelle 3 aufgeführt.

Vergleichsbeispiel C

Analog dem Beispiel 7 wurde die gleiche Menge des im Beispiel 7 verwendeten Propylenpolymerisats unter den gleichen Bedingungen, aber ohne Zugabe eines Vernetzungssystems aus einem ungesättigten Organosilan, einem radikalischen Initiator und einem Kondensationskatalysator, aufgearbeitet.

Der Schmelzflußindex und die Ergebnisse von Dehnungsversuchen (Dehnung bei Streckspannung und Reißdehnung) der dabei erhaltenen Kunststoffmasse sind in der nachfolgenden Tabelle 3 aufgeführt.

Tabelle 3

| | Beispiele | | | Vergleichsbeispiele | |
|---|---|---|---|---|---|
| | 5 | 6 | 7 | B | C |
| Schmelzflußindex a) [g/10 min] | 1,9 | 5,5 | 6,2 | 10,4 | 2,0 |
| Dehnung bei Streckspannung b), mit Bindenaht [%] | 11 | 15 | 6 | 3 | 3 |
| Reißdehnung, mit b) Bindenaht [%] | 41 | 30 | 22 | 12 | 3 |

a) analog DIN 53 735, bei 230°C und unter einem Gewicht von 2,16 kg

b) Zur Dehnungsprüfung mit Bindenaht wurden zweiseitig angespritzte Schulterstäbe hergestellt, die in der Mitte eine Bindenaht quer zur Längsachse aufwiesen. Der Schulterstab entsprach dabei in seinen Abmessungen dem Normalschulterstab Typ 1 nach ISO 527 und besaß eine Dicke von 3 mm. Die Herstellung dieses Schulterstabs erfolgte bei einer Temperatur von 250°C und einer Fließfrontgeschwindigkeit von 200 mm/sec..

An den auf diese Weise hergestellten Schulterstäben wurden durch Zugexperimente nach DIN 53 457 bei 23°C die Dehnung bei Streckspannung und die Reißdehnung, jeweils mit Bindenaht, bestimmt.

**Patentansprüche**

**1.** Teilvernetzte Kunststoffmasse mit einem Schmelzflußindex von 0,1 bis 50 g/10 min., bei 230°C und unter einem Gewicht von 2,16 kg, aus

a) einem Polymerisat aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat, beträgt

b) einer Organosilanverbindung der folgenden Formel (I)

$$A_{4-n}SiR_n, \qquad (I)$$

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht,

erhältlich durch Umsetzung des Polymerisats a) mit der Organosilanverbindung b) in Anwesenheit eines radikalischen Initiators und eines Kondensationskatalysators, bei Temperaturen von 180 bis 280°C, Drücken von 1 bis 100 bar und mittleren Verweilzeiten des Reaktionsgemisches von 0,2 bis 10 Minuten.

**2.** Teilvernetzte Kunststoffmasse nach Anspruch 1, wobei man pro 100 Gew.-Teile des Polymerisats a) 0,1 bis 5 Gew.-Teile der Organosilanverbindung b), 0,001 bis 2 Gew.-Teile des radikalischen Initiators und 0,001 bis 0,1 Gew.-Teile des Kondensationskatalysators verwendet.

**3.** Teilvernetzte Kunststoffmasse nach den Ansprüchen 1 oder 2, wobei das Polymerisat a) aus 35 bis 90

Gew.-% Polypropylen und 10 bis 65 Gew.-% eines Propylencopolymerisats besteht.

4. Teilvernetzte Kunststoffmasse nach den Ansprüchen 1 bis 3, in deren Organosilanverbindung R für eine $C_1$-$C_8$-Alkoxygruppe und n für 3 steht

5. Verfahren zur Herstellung von teilvernetzten Kunststoffmassen gemäß den Ansprüchen 1 bis 4, dadurch gekennzeichnet, daß man die Organosilanverbindung b) zusammen mit dem radikalischen Initiator und dem Kondensationskatalysator dem Polymerisat a) unmittelbar nach dessen Herstellung in einer, an den Herstellungsreaktor angeschlossenen Mischapparatur hinzusetzt.

6. Verwendung der teilvernetzten Kunststoffmassen gemäß den Ansprüchen 1 bis 4 zur Herstellung von Folien und Formkörpern.

Europäisches Patentamt

# EUROPÄISCHER RECHERCHENBERICHT

Nummer der Anmeldung

EP 92 10 3214

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 412 518 (UNION CARBIDE CHEMICALS AND PLASTICS COMPANY, INC.)<br>* Ansprüche 1-18 *<br>* Beispiele *<br>* Seite 2, Zeile 41 - Seite 3, Zeile 10 *<br>* Seite 3, Zeile 38 - Zeile 45 * | 1-6 | C08F255/02<br>//(C08F255/02, 230:08) |
| D,A | DE-A-3 520 106 (DYNAMIT NOBEL AG)<br>* Ansprüche 1-15 *<br>* Seite 16, Zeile 15 - Seite 17, Zeile 3 * | 1-2,4-6 | |
| D,A | DE-A-3 327 149 (DYNAMIT NOBEL AG)<br>* Ansprüche 1-14 * | 1-2,4-6 | |
| A | EP-A-0 004 034 (THE FURUKAWA ELECTRIC CO LTD)<br>* Ansprüche 1-9 *<br>* Seite 6, Zeile 3 - Seite 7, Zeile 15 *<br>* Seite 8, Zeile 7 - Seite 9, Zeile 8 * | 1-2,4 | |
| | | | **RECHERCHIERTE SACHGEBIETE (Int. Cl.5 )** |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 22 MAI 1992 | PERSSON E.K. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)